# EUROPÄISCHE PATENTSCHRIFT

(11) **EP 2 203 776 B1**
(45) Veröffentlichungstag und Bekanntmachung des Hinweises auf die Patenterteilung: **18.03.2020**
(21) Anmeldenummer: 08802309.8
(22) Anmeldetag: 18.09.2008
(51) Int. Cl.: G02B 21/34

(54) **VERFAHREN ZUM POSITIONIEREN VON BIOLOGISCHEN PROBEN IN EINER MIKROSKOPISCHEN ANORDNUNG UND VORRICHTUNGEN ZUM AUSFÜHREN DIESER VERFAHREN**
METHODS FOR POSITIONING BIOLOGICAL SAMPLES IN A MICROSCOPIC ARRANGEMENT AND DEVICES FOR CARRYING OUT THESE METHODS
PROCÉDÉS POUR POSITIONNER DES ÉCHANTILLONS BIOLOGIQUES DANS UN DISPOSITIF À MICROSCOPE ET APPAREILS POUR EFFECTUER CES PROCÉDÉS

(30) Priorität: 09.10.2007 DE 102007048409
(43) Veröffentlichungstag der Anmeldung: 07.07.2010
(73) Patentinhaber: Carl Zeiss Microscopy GmbH, 07745 Jena (DE)
(72) Erfinder: LIPPERT, Helmut, 07743 Jena (DE); RADT, Benno, 22085 Hamburg (DE); DIETRICH, Christian, 07743 Jena (DE); POWER, Christopher, Cheshire SK8 6AR (GB)
(74) Vertreter: Meyer, Jork
(86) Internationale Anmeldenummer: PCT/EP2008/007785
(87) Internationale Veröffentlichungsnummer: WO 2009/049740

(56) Entgegenhaltungen:
- WO-A-2007/065711
- US-A1- 2002 060 791
- US-A1- 2005 085 721
- US-A1- 2007 109 633
- ENGELBRECHT C J ET AL: "RESOLUTION ENHANCEMENT IN A LIGHT-SHEET-BASED MICROSCOPY (SPIM)" OPTICS LETTERS, OSA, OPTICAL SOCIETY OF AMERICA, WASHINGTON, DC, US, Bd. 31, Nr. 10, 15. Mai 2006 (2006-05-15), Seiten 1477-1479, XP001242795 ISSN: 0146-9592

## Beschreibung

Die Erfindung bezieht sich auf ein Verfahren zum Positionieren mindestens einer vorzugsweise -biologischen Probe im Probenraum einer mikroskopischen Anordnung. Gegenstand der Erfindung sind weiterhin Vorrichtungen zum Ausüben dieser Verfahren.

Die erfindungsgemäße Probenhalterung ist insbesondere im Zusammenhang mit der Single-Plane-Illumination-Mikroskopie {SPIM), auch als Selective-Plane-Illumination-Mikroskopie bezeichnet, anwendbar. Während mit der konfokalen Laser-Scanning-Mikroskopie eine Probe in mehreren unterschiedlich tiefen Ebenen Punkt für Punkt abgetastet wird und daraus dreidimensionale Bildinformationen der Probe gewonnen werden, beruht die SPIM-Technologie auf der Weitfeldmikroskopie und ermöglicht die dreidimensionale bildliche Darstellung von Proben auf der Grundlage von optischen Schnitten durch verschiedene Ebenen der Probe.

Dabei bestehen die Vorteile der SPIM-Technologie unter anderem in der größeren Geschwindigkeit, mit der die Bilderfassung erfolgt, einem geringeren Ausbleichen von biologischen Proben sowie einer erweiterten Eindringtiefe des Fokus in die Probe.

Aus der US 2005/0085721 A1 ist ein Scanverfahren für gefärbte biologische Proben bekannt, bei dem dreidimensionale Abbildungen der Proben erstellt werden. Mittels eines optischen Tomographiesystems wird die um eine Achse rotierte Probe mehrfach abgebildet und aus den so gewonnenen Abbildungen eine dreidimensionale Darstellung berechnet.

In einem Aufsatz beschreiben Engelbrecht und Stelzer (Engelbrecht, C. J. und Stelzer, E. H. K. , Stelzer, 2006: Resolution enhancement in a light-sheet-based microscope (SPIM), OPTICS LETTERS 31 (10): 1477 - 1479) ein Lichtblattmikroskop, bei dem unter Nutzung lateraler und axialer Verteilungsfunktionen (point spread function; PSF) fluoreszierender Objekte die Bildauflösung bestimmt wird. Die tatsächlich erreichten Auflösungen weichen im Vergleich zu theoretischen Überlegungen und Simulationen um weniger als 5% ab.

Die SPIM-Technologie ist beispielsweise auch beschrieben in Stelzer et al., Optics Letter 31,1477 (2006), in Stelzer et al., Science 305, 1007 (2004), in der DE 102 57 423 A1 und in der WO 2004/0530558 A1.

Eine Probenhalterung für ein Mikroskop ist beispielsweise aus der WO 2007/065711 bekannt. Eine verschließbare Kammer ist an einem Objektiv des Mikroskops montierbar. Weiterhin ist eine Probenauflage vorhanden, die mindestens ein Fenster aufweist, durch dass eine in einer Matrix eingebettete Probe mittels des Mikroskops beobachtet werden kann.

Aus der US-A1-2007/0109633 ist eine Probenhalterung für ein Mikroskop bekannt wobei die Probe in einem Körper aus transparentem Gel eingebettet wird.

Aus diesen Veröffentlichungen ist u.a. ein Probenhalter bekannt, der ein optimales Ausrichten der Probe im Hinblick auf die Gewinnung von dreidimensionalen Bilddaten aus verschiedenen Blickrichtungen ermöglicht. Dazu wird die Probe in ein Gel, welches zu einem Kreiszylinder geformt ist, eingebettet und dieser Gelzylinder in eine mit einem Immersionsmedium, beispielsweise Wasser, gefüllte Probenkammer eingebracht. Dabei darf sich der Brechungsindex des Gels nicht wesentlich vom Brechungsindex des umgebenden Immersionsmediums unterscheiden.

Die optische Achse des Detektionsobjektivs, welches das von der Probe kommende Detektionslicht aufsammelt, ist dabei im wesentlichen senkrecht zur Rotationsachse des Gelzylinders ausgerichtet.

Problematisch ist es dabei oft, die Proben so im Probenraum zu positionieren, daß sich die von der Probe gewonnenen Bildinformationen trotz häufiger Änderung der Detektionsrichtung überschneiden, damit daraus eine hochwertige 3D-Abbildung errechnet werden kann. Zudem sollen die Proben so positioniert sein, dass besonders interessierende Teile der Proben optimal in das Bildfeld gerückt werden können. Außerdem ist es wünschenswert, daß die Proben möglichst lange lebend beobachtet und nach Möglichkeit auch nach einer Detektion zur weiteren Verwendung am Leben erhalten werden können.

Weiterhin besteht häufig das Bedürfnis, eine Vielzahl gleichartiger Proben zeitlich aufeinander folgend mit hohem Durchsatz je Zeiteinheit zu detektieren.

Ausgehend davon liegt der Erfindung die Aufgabe zugrunde, Verfahren und Vorrichtungen vorzuschlagen, die mit höherer Effizienz das Positionieren mindestens einer, bevorzugt biologischer Probe im Probenraum einer mikroskopischen Anordnung ermöglichen.

Die Aufgabe wird hinsichtlich des Verfahrens durch die Merkmale des Anspruchs 1 und hinsichtlich der Vorrichtung durch die Merkmale der Ansprüche 3 und 5 gelöst. Vorteilhafte Weiterbildungen sind Gegenstand der abhängigen Ansprüche.

Die Aufgabe wird mit einem Verfahren zum Positionieren mindestens einer Probe im Probenraum einer mikroskopischen Anordnung gelöst, wobei die mindestens eine Probe in einen Körper aus transparentem Gel eingebettet wird und das Gel zu einem Gelkörper geformt wird. Der Gelkörper wird vermittels einer um eine Drehachse senkrecht zur optischen Achse des Detektionsobjektivs drehbaren Haltevorrichtung im Probenraum fixiert, wobei mit einer Drehung der Haltevorrichtung um einen vorgegebenen Drehwinkel die Detektionsrichtung geändert wird, die Ausrichtung der Probe relativ zur optischen Achse eines Detektionsobjektivs mehrfach verändert wird, aus jeder sich dabei ergebenden Detektionsrichtung Bildinformationen der Probe gewonnen werden, und dabei die Probe so gehalten wird, daß aus jeder Detektionsrichtung eine weitestgehend ungehinderte Sicht auf die Probe oder Teile der Probe gewährleistet ist.

Gekennzeichnet ist ein erfindungsgemäßes Verfahren dadurch, dass der Gelkörper mit einer Aussparung in Form eines Hohlkegels für die Probe versehen wird und die Probe in der Hohlkegelspitze positioniert und dort unter Einwirkung einer geringen, das Leben der Probe nicht gefährdenden Kraft gehalten wird.

Der Gelkörper wird mit einer Aussparung in Form eines Hohlkegels versehen. Die Probe wird in der Hohlkegelspitze positioniert und dort unter Einwirkung einer geringen, das Leben der Probe nicht gefährdenden Kraft gehalten.

Beispielsweise wird der Gelkörper mit der Probe in der Haltevorrichtung so fixiert, daß auch bei deren Drehung die Probe durch Einwirkung der Erdschwerkraft in der Hohlkegelspitze gehalten wird, was mit einer entsprechenden Lageausrichtung des Gelkörpers erreicht wird.

Diese Ausgestaltung hat nicht nur den Vorteil, daß sich die in der Aussparung befindende Probe verhältnismäßig frei bewegen und hinsichtlich ihres Umfanges auch noch wachsen kann, sondern sie kann nach Ende der Beobachtung bzw. Detektion wieder aus dem Gelkörper entnommen werden und ist so für weitere Untersuchungen verfügbar.

Alternativ dazu besteht eine erfindungsgemäße Verfahrensweise darin, die Aussparung nach dem Einbringen der Probe abzudecken oder in die Aussparung nach dem Einbringen der Probe ein transparentes Medium einzufüllen und die Probe vermittels dieses Mediums in ihrer Position in der Aussparung, einer Hohlkegelspitze, zu halten.

Besonders vorteilhaft ist es, hierzu ein zunächst flüssiges, dann aber innerhalb einer Zeitspanne und unter einer vorgegeben Temperatur aushärtendes Medium zu verwenden, so daß die Probe nach dem Aushärten in ihrer Position innerhalb der Aussparung fixiert ist.

Um bei der Detektion mehrerer Proben einen höheren Durchsatz zu erreichen, ist erfindungsgemäß vorgesehen, das Gel zunächst zu einem Gelkörper vorzuformen und den vorgeformten Gelkörper mit einer Anzahl von Aussparungen zu versehen, die der Anzahl der Proben entspricht, danach jeweils eine Probe in jeweils eine Aussparung einzubringen und innerhalb der Aussparung zu positionieren und ggf. zu fixieren.

Optional können die Proben zeitlich nacheinander oder zeitgleich in die Aussparungen eingebracht werden und die Aussparungen nach dem Einbringen der Proben mit einer Abdeckung zu verschließen.

In einer weiteren speziellen Ausgestaltung ist vorgesehen, daß der Gelkörper zunächst im Bereich einer Aussparung, in die eine Probe eingebracht werden soll, erwärmt wird, dann die Probe eingebracht wird, danach ein zunächst flüssiges, dann aber aushärtendes Medium in die Aussparung eingebracht wird, wonach der Gelkörper im Bereich dieser bereits mit der Probe bestückten und mit dem aushärtenden Medium gefüllten Aussparung gekühlt wird, um das Aushärten zu beschleunigen oder die Dauer des Aushärteprozesses auf eine vorgegebene Zeitspanne zu verkürzen.

Hierbei ist es wiederum vorteilhaft, wenn in einem vorgegebenen Zeittakt der Gelkörper im Bereich einer ersten Aussparung erwärmt wird, dann die Probe in diese Aussparung eingebracht und das aushärtende Medium in diese Aussparung eingefüllt wird, während zugleich das Gel im Bereich einer zweiten Aussparung erwärmt wird, danach das Gel im Bereich der ersten Aussparung gekühlt wird, während zugleich in die zweite Aussparung die Probe eingebracht, das aushärtende Medium eingefüllt und das Gel im Bereich einer dritten Aussparung vorgewärmt wird, danach das Gel im Bereich der zweiten Aussparung gekühlt wird, während zugleich in die dritte Aussparung die Probe eingebracht, das aushärtende Medium eingefüllt und das Gel im Bereich einer dritten Aussparung vorgewärmt wird und so fortlaufend, bis in jeder Aussparung eine Probe enthalten und fixiert ist.

Bezüglich des Einbringens der Proben in die Aussparungen kann vorgesehen sein, daß mehrere Proben in einem Probenreservoir aufbewahrt und aus diesem Reservoir Proben einzeln entnommen und in die Aussparungen eingebracht werden, wobei das Vereinzeln der Proben und das Einbringen in die Aussparungen vorteilhaft automatisiert vorgenommen werden sollte.

Das Transportieren der Proben vom Probenreservoir zu einer Einfüllposition und das Einbringen in die Aussparungen erfolgt vorteilhaft durch eine Kanüle hindurch. Durch eine Kanüle hindurch werden die Proben vorteilhaft auch an ihre Position an der Außen- oder Innenfläche einer Stützvorrichtung an eine Kapillaröffnung gebracht.

Alternativ zu der Verfahrensweise, bei der mehrere Proben in einen Gelkörper eingebracht werden, kann vorgesehen sein, jede Probe einzeln in einen ihr zugeordneten Gelkörper einzubetten, die jeweils eine Probe enthaltenden Gelkörper einzeln und zeitlich nacheinander in den Probenraum zu transportieren und jeweils nach Ende der Detektion der eingeschlossenen Probe wieder aus dem Probenraum abzutransportieren.

In einer nicht zur Erfindung gehörenden Ausgestaltung kann das Einbetten einer Probe in einen Körper aus Gel vorgenommen werden, indem eine erste Teilmenge des Gels in eine erste Hälfte einer in Längsrichtung geteilten Kanüle eingelegt wird, dann die Probe auf diese Teilmenge aufgelegt wird, danach auf die Probe eine zweite Teilmenge des Gels aufgelegt wird, die zweite Hälfte der geteilten Kanüle unter Druck aufgelegt wird, so daß sich infolge der zwischen diesen beiden Hälften ausbildenden zylindrischen Hohlform das Gel zu einem Gelkörper formt, dessen Außendurchmesser dem Innendurchmesser der Kanüle entspricht und in den die Probe eingeschlossen ist.

Im Rahmen der nicht zur Erfindung gehörenden Ausgestaltung liegt es selbstverständlich, wenn die Kanüle nicht in Längsrichtung, sondern anderweitig geteilt ist, oder anstelle der Kanüle eine ähnlich geformter Gegenstand zur Anwendung kommt, der denselben Zweck erfüllt.

Wird in der Folge eine Zentrierung der eingebetteten Probe innerhalb des Gelkörpers gewünscht, wird der Gelkörper aus Gel in noch nicht ausgehärtetem Zustand mit der eingeschlossenen Probe in eine Kontrollstation eingeschoben, mittels der Kontrollstation die Lage der Probe innerhalb des Gelkörpers bewertet, und im Ergebnis dieser Bewertung der Gelkörper relativ zur Erdschwerkraft so ausgerichtet, daß die Probe unter Einwirkung der Schwerkraft in die gewünschte Position innerhalb des Gelkörpers sinkt.

Die Kontrollstation kann dabei zur visuellen Kontrolle durch einen Bediener oder auch zur opto-elektronischen Kontrolle vermittels Sensoren und Auswerteschaltung ausgelegt sein.

Um auch Proben detektieren zu können, die aus biologischen oder anderen Substanzen größerer Abmessungen entnommen werden, wird in einer nicht zur Erfindung gehörenden Ausgestaltung des Verfahrens eine Kanüle mit einem der Substanz zugewandten, scharf angeschliffenen Ende in die Substanz eingedrückt, dann wird die Teilmenge vermittels eines innerhalb der Kanüle verschiebbar geführten und mit einem Schubgestänge verbundenen Stempel beim Herausnehmen der Kanüle aus der Substanz in der Kanüle gehalten, und schließlich die Kanüle mit der Teilmenge in den Probenraum gebracht, wo vermittels des Schubgestänges und des Stempels die Teilmenge zum Teil aus der Kanüle herausgeschoben und der herausgeschobene Teil als Probe detektiert wird, während der übrige Teil von der Kanüle gehalten wird.

Als Gel, in das die Proben eingebettet werden, und auch als aushärtendes Medium kommt beispielsweise Agarose-Gel in Betracht.

Die Aufgabe der Erfindung wird weiterhin gelöst mit Vorrichtungen, die nachfolgend in verschiedenen Ausgestaltungsvarianten beschrieben werden.

So umfaßt eine erste Ausgestaltungsvariante einer Vorrichtung zum Positionieren mindestens einer biologischen Probe im Probenraum einer mikroskopischen Anordnung nach Anspruch 3.

Eine zweite Ausgestaltungsvariante der erfindungsgemäßen Vorrichtung zum Positionieren mindestens einer biologischen Probe im Probenraum einer mikroskopischen Anordnung nach Anspruch 5.

In einer nicht zur Erfindung gehörenden dritten Ausgestaltungsvariante der Vorrichtung sind vorgesehen:
- ein Gelkörper, der an mehreren Positionen Aussparungen für jeweils eine einzelne Proben aufweist,
- eine Zuführeinrichtung zum Entnehmen einzelner Proben aus einem Probenreservoir und zu deren Transport zu einer Einfüllposition, sowie
- eine Vorschubeinrichtung, die den Gelkörper aufnimmt und durch deren Betätigung der Gelkörper so verschoben wird, daß die Aussparungen zeitlich nacheinander zu der Einfüllposition gelangen, wo jeweils eine Probe in eine der Aussparungen eingebracht wird.

Diese dritte Ausgestaltungsvariante kann zusätzlich ausgestattet sein mit einer Zuführeinrichtung für ein aushärtendes Mediums und zu dessen Einfüllen in die Aussparung nach dem Einbringen einer Probe.

In diesem Zusammenhang kann eine mit dem Gelkörper wärmeleitend in Verbindung stehende Heiz- und/oder Kühlstation vorhanden sein, die vor dem Einfüllen des Mediums eine Erwärmung bzw. nach dem Einfüllen des Mediums eine Abkühlung des Gelkörpers zumindest im Bereich einer bestimmten Aussparung bewirkt.

Dabei ist es besonders vorteilhaft, wenn die Zeitdauer für das Einfüllen der Probe, für das Einfüllen des Mediums und für das Erwärmen oder Kühlen unter Berücksichtigung der Eigenschaft des aushärtenden Mediums so aufeinander abgestimmt sind, daß eine gleichförmige Vorschubgeschwindigkeit für den Bestückungsvorgang erzielt wird.

Von Vorteil ist es wenn insbesondere die zweite Ausgestaltungsvariante der erfindungsgemäßen Vorrichtung ausgestattet ist mit einer Schneidvorrichtung zum Ausschneiden der zur Aufnahme von Proben bestimmten Aussparungen im Gelkörper.

Von Vorteil ist es wenn insbesondere die zweite Ausgestaltungsvariante der erfindungsgemäßen Vorrichtung ausgestattet ist mit einer Schneidvorrichtung zum Ausschneiden der zur Aufnahme von Proben bestimmten Aussparungen im Gelkörper. So kann die Schneidvorrichtung beispielsweise über ein rotierendes Messer zum Aussparen kegel- oder zylinderförmiger Teile des Gels aus dem Gelkörper verfügen.

Auch ist es von Vorteil, wenn der Schneidvorrichtung eine Kanüle zum Zuführen jeweils einer einzelnen Probe in eine ausgeschnittene Aussparung zugeordnet ist. Mit dem nahezu unmittelbar aufeinander folgenden Ausschneiden der Aussparung und dem Einbringen der Probe an ein- und derselben Position ist in zeitsparender Weise eine Bestückung der vorgeformten Gelkörper mit Proben möglich.

Die Erfindung soll nachfolgen anhand verschiedener Ausführungsbeispiele näher erläutert werden. In den zugehörigen Zeichnungen zeigen:
- Fig. 1a: bis le Beispiele für die Einbettung einer Probe in ein transparentes Gel gemäß dem Stand der Technik (Fig. la) und mehrere erfindungsgemäße Beispiele für das Halten einer Probe an der Außen- oder Innenfläche einer Stützvorrichtung (Fig. 1b bis 1e),
- Fig. 2a und 2b: ein Beispiel für das Halten einer Probe mittels Kapillarwirkung,
- Fig. 3: ein Beispiel für einen vorgeformten, mit einer Aussparung für eine Probe versehenen Gelkörper,
- Fig. 4a und 4b: Beispiele für vorgeformte, mit mehreren Aussparungen für Proben versehene Gelkörper,
- Fig. 5a und 5b: ein Beispiel für einen vorgeformten, mit mehreren Aussparungen für Proben versehenen Gelkörper mit einem Mechanismus zum Verschließen der Aussparungen nach dem Einbringen der Proben in zwei Konstellationen,
- Fig. 6: ein Beispiel für einen vorgeformten, mit mehreren Aussparungen für Proben versehenen Gelkörper in Verbindung mit einer Zuführeinrichtung für einzelne Proben sowie mit einer Heiz- und Kühlstation,
- Fig. 7: das Beispiel einer Zuführeinrichtung für einzelne Gelkörper zum Probenraum, wobei in jeden Gelkörper eine Probe eingeschlossen ist,
- Fig.8: ein erstes Beispiel einer Vereinzelungs- und Zuführeinrichtung für Proben vermittels Injektionswirkung.
- Fig.9: ein zweites Beispiel einer Vereinzelungs- und Zuführeinrichtung für Proben vermittels Injektionswirkung.
- Fig. 10a bis 10c: ein Beispiel für ein Verfahren und eine zugehörige Vorrichtung zum Einbetten einer Probe in einen Gelkörper,
- Fig.11: ein Beispiel für ein Verfahren und eine zugehörige Vorrichtung zum definierten Positionieren einer Probe innerhalb eines Gelkörpers nach Fig.10a bis 10c,
- Fig.12a bis 12d: ein Beispiel für eine Verfahrensweise zum Entnehmen einer zur Detektion bestimmten Probe aus einer zu untersuchenden Substanz.

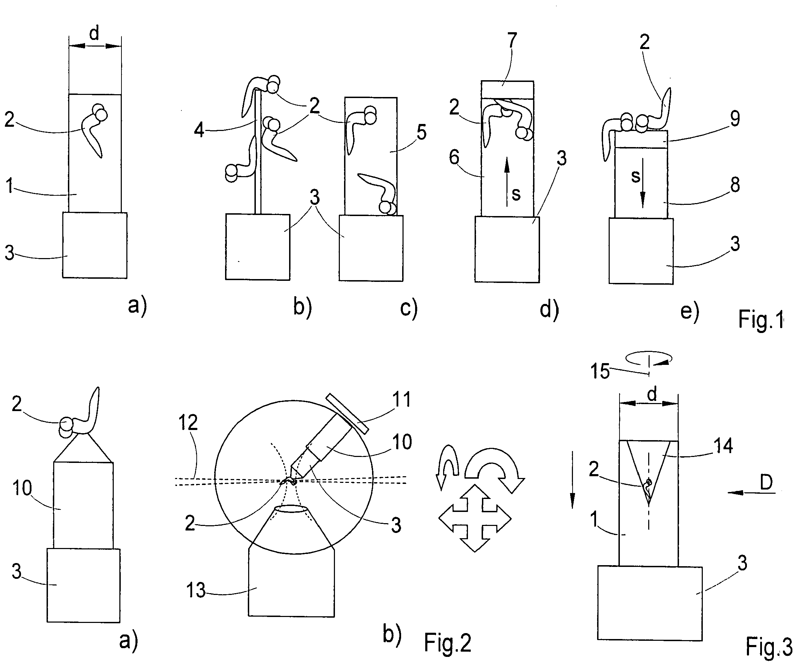

Fig. 1 zeigt verschiedene Ausführungsbeispiele für die lebenserhaltende Positionierung einer biologischen Probe im Probenraum einer mikroskopischen Anordnung, bevorzugt zur Gewinnung einer dreidimensionalen Abbildung der Probe, insbesondere nach der Single-Plan-Illumination-Mikroskopie (SPIM).

In Fig. la ist in ein zu einem Kreiszylinder mit dem Durchmesser d geformtes Gel 1 eine Probe 2, beispielsweise ein Zebrafischembryo, eingebettet. Der Zylinder aus dem Gel 1 ist auf einen Probenhalter 3 aufgesetzt, der sich im Probenraum der mikroskopischen Anordnung befindet. Unter Probenraum im Sinne der vorliegenden Erfindung ist der Bereich zu verstehen, der im Detektionsbereich eines Mikroskopobjektivs liegt, das im Zusammenhang mit der Erfindung auch als Detektionsobjektiv bezeichnet wird.

Diese anhand Fig. la erläutert Verfahrensweise der Einbettung einer einzelnen Probe 2 in ein transparentes Gel 1 gehört zum Stand der Technik. Nachteilig hierbei ist, daß die Lebensdauer der Probe 2 äußerst begrenzt ist, da sowohl ihre Bewegungsfreiheit als auch die Möglichkeit ihres Wachstums eingeschränkt sind. Darüber hinaus ist es oftmals wünschenswert, die Probe 2 auch nach der mikroskopischen Untersuchung am Leben zu erhalten und für weitere Beobachtungen verfügbar zu haben. Dies gelingt nach dieser Methode nicht. Außerdem besteht ein weiterer Nachteil darin, daß das Gel einen von der Umgebung, beispielsweise von einer umgebenden Immersionsflüssigkeit, abweichenden Brechungsindex hat und somit die Abbildung der Probe hinsichtlich der dabei erzielten Bildqualität Wünsche offen läßt.

Eine Vorrichtung, die diese Nachteile weitestgehend behebt, ist in Fig. lb dargestellt. Hier sind beispielsweise drei Proben 2, etwa wiederum Zebrafischembryonen, durch Adhäsionskraft an einen als Stützvorrichtung wirkenden Stab 4 gebunden. Der Stab 4 besteht ebenfalls aus einem transparenten Material, beispielsweise einem ausgehärteten Gel, und befindet sich gemeinsam mit den Proben 2 innerhalb einer Immersionsflüssigkeit, beispielsweise Wasser.

Die Anzahl von drei Proben 2 ist hier lediglich beispielhaft gewählt.

Der Vorteil besteht darin, daß jede der Proben 2 Bewegungsfreiheit hat und ihr Wachstum auch nicht eingeschränkt ist. Auch ist die Lebenserhaltung nach Abschluß der Beobachtung unproblematisch, indem die Probe in einfacher Weise vom Stab 4 wieder abgenommen werden kann.

Fig. lc zeigt einen Hohlkörper 5, an dessen Innenwand Proben 2 durch Adhäsionskräfte gehalten werden. Hier steht über die Vorteile der Bewegungsfreiheit und des uneingeschränkten Wachstums hinaus der Vorteil, daß die Proben 2 nicht mit der Immersionsflüssigkeit in Berührung kommen. Auch hierbei ist die Lebenserhaltung der Proben 2 nach Ende der Beobachtung bzw. der mikroskopischen Abbildung unproblematisch.

Wie in Fig.1a und Fig.lb auch ist der Hohlkörper 5 auf einem Probenhalter 3 positioniert. Die Wandung des Hohlkörpers 5 besteht aus einem transparenten Material, beispielsweise wiederum einem ausgehärteten Gel mit Brechungseigenschaften, die denen des Immersionsmediums möglichst nahe kommen.

In Fig. 1d ist wiederum ein Hohlkörper 6 dargestellt, der allerdings sowohl an seinem dem Probenhalter 3 zugewandten Ende als auch an seinem dem Probenhalter 3 abgewandten Ende offen ist und vom Probenhalter 3 her in Pfeilrichtung S von einem flüssigen oder gasförmigen Medium durchströmt wird.

Das strömende Medium führt die Proben 2 mit sich bis zu dem Filter 7. Der Filter 7 läßt das strömende Medium passieren, nicht jedoch die Proben 2. Bezüglich der Lebenserhaltung der Proben 2 und ihrer Weiterverwendung ergeben sich nahezu die gleichen Vorteile wie bei der Ausführung nach Fig. 1b und Fig. 1c.

Fig. le zeigt die Umkehrung der Verfahrensweise nach Fig. 1d. Der Unterschied besteht hier lediglich darin, daß sich die Proben 2 außerhalb eines Hohlkörpers 8 befinden, und die Strömung des flüssigen oder gasförmigen Mediums umgekehrt durch einen Filter 9 und den Hohlkörper 8 hindurch zum Probenhalter 3 gerichtet ist. Das strömende Medium sorgt dafür, daß die Proben 2 am Filter 9 gehalten werden.

Fig.2 zeigt ein Beispiel für das Halten einer Probe 2 mittels Kapillarwirkung. Das Prinzip ist anhand Fig.2a dargestellt. Hier ist eine mit einem flüssigen Medium gefüllt Kapillare 10 auf einem Probenhalter 3 positioniert. Eine einzelne Probe 2 wird an der Kapillaröffnung gehalten.

Fig. 2b zeigt die Vorteile einer solchen Ausgestaltung der erfindungsgemäßen Vorrichtung. Hier ist die Probenhalterung 3 gemeinsam mit der Kapillare 10 und der Probe 2 an einer Positioniereinrichtung 11 befestigt, die bezüglich der Ausrichtung der Probe 2 vorzugsweise in sechs Freiheitsgraden variabel ist. Dadurch ist es möglich, die Probe 2 in verschiedensten Ausrichtungen relativ zu einem Lichtblatt 12 und einem Detektionsobjektiv 13 zu halten.

Fig.3 zeigt wiederum ein Beispiel für das Halten und Positionieren einer Probe 2 vermittels eines Gels 1, das hier wiederum zu einem Zylinder mit dem Durchmesser d geformt und auf einem Probenhalter 3 befestigt ist. Allerdings ist aus diesem Gelzylinder ein Teil des Gels 1 so entfernt worden, daß eine Aussparung 14 in Form eines Hohlkegels entstanden ist.

Dabei befindet sich die Hohlkegelspitze in der Drehachse 15, um die der Probenhalter 3 drehbar gelagert ist. Wird in die Aussparung 14 eine Probe 2 eingebracht, und ist der Gelzylinder relativ zur Erdschwerkraft entsprechend ausgerichtet, wird die Probe 2 in die Hohlkegelspitze absinken und befindet sich so in einer zur Drehachse 15 zentrierten Position.

Mit der Rotation des Probenhalters 3 rotiert somit sowohl der Gelzylinder als auch die Probe 2 und ermöglicht so die Detektion aus der Richtung D mit Blickwinkeln, die durch Drehung in einem Winkelbereich von 0 ° bis 360 ° variiert werden können.

Auch hier ist Vorteil, daß die Probe 2 nach Ende der Beobachtung bzw. nach Abschluß der Detektion aus dem Gelzylinder entnommen werden kann und zur Weiterverwendung zur Verfügung steht.

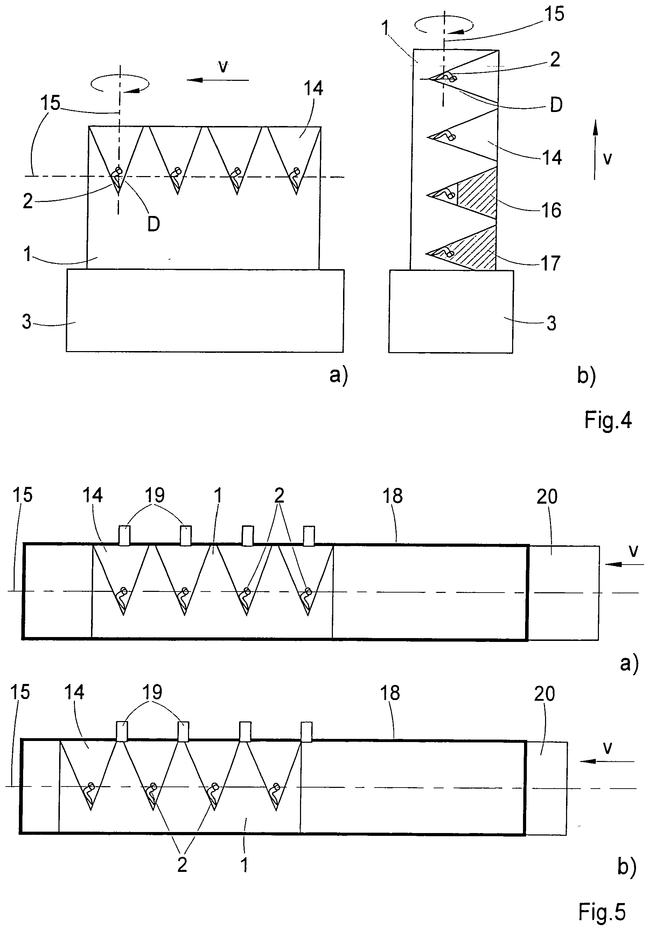

In Fig.4 ist ein aus einem transparenten Gel 1 vorgeformter Gelkörper dargestellt, der mehrere Aussparungen 14 in Form von Hohlkegeln für jeweils eine Probe 2 aufweist. Die in dieser Weise ausgeführte erfindungsgemäße Vorrichtung kann so positioniert sein, daß die in die Aussparungen 14 eingebrachten Proben 2 auf Grund der Einwirkung der Erdschwerkraft in die Hohlkegelspitzen absinken und während der Beobachtung bzw. während der Gewinnung der Bildinformationen auch dort verbleiben.

Dabei ist diese Vorrichtung vorteilhaft mit einer Vorschubeinrichtung (zeichnerisch nicht dargestellt) verbunden, die, etwa durch einen von einem Bediener oder von einer Ansteuerschaltung ausgelösten Steuerbefehl, eine Vorschubbewegung in der Richtung V veranlaßt.

Die Vorschubbewegung bewirkt, daß die mit jeweils einer Probe 2 besetzten Aussparungen 14 zeitlich nacheinander in die optische Achse eines Detektionsobjektivs gebracht werden.

In der in Fig. 4a gewählten Darstellung ist die optische Achse des Detektionsobjektivs und damit auch die Detektionsrichtung senkrecht zur Zeichenebene ausgerichtet. Die senkrecht auf der Zeichenebene stehende Detektionsrichtung ist hier wie in Fig.3 auch mit D angedeutet.

Hierbei kann, wie bereits anhand Fig.3 erläutert, die Haltevorrichtung 3 auf einer Schwenkvorrichtung angeordnet sein, welche die Drehung der Probe 2 um eine in der Zeichenebene liegende Drehachse 15 ermöglicht. Dabei schneidet die Drehachse 15 die Detektionsrichtung D im rechten Winkel. Allerdings ist hierbei die Vorgabe von Detektionsrichtungen eingeschränkt, da teilweise eine Abschattung durch die übrigen im Gel 1 enthaltenen Proben erfolgt.

Diesem Nachteil wird beispielsweise abgeholfen mit der Vorrichtung nach Fig. 4b. Hier sind ebenfalls mehrere Proben 2 in ein zu einem Gelkörper vorgeformtes Gel 1 eingebettet, und alle eingebetteten Proben 2 liegen in der Drehachse 15.

Die Detektionsrichtung D schließt auch hier wie in Fig. 4a mit der Drehachse 15 einen rechten Winkel ein und ist senkrecht zur Zeichenebene ausgerichtet.

Allerdings werden hier die Proben 2 nicht durch die Erdschwerkraft in der Hohlkegelspitze der Aussparungen 14 gehalten. Um die Positionierung der Proben 2 trotzdem dort zu gewährleisten, werden die Aussparungen 14 entweder mit einem vorgeformten Pfropfen 16 aus bereits ausgehärtetem Gel verschlossen oder, mit einem zunächst flüssigen und dann aushärtenden Gel 17 gefüllt.

Letzteres wird in der in Fig. 4a gezeigten Ausrichtung des Gelkörpers vorgenommen, wobei die Proben 2 zunächst aufgrund der Erdschwerkrafteinwirkung in die Hohlkegelspitze fallen. Erst wenn alle Aussparungen 14 mit ausgehärtetem Gel versehen und damit die Proben 2 in der Hohlkegelspitze fixiert sind, wird der Gelkörper in die in Fig. 4b gezeichnete Lage gebracht.

Um die Aussparungen mit den Proben 2 zeitlich nacheinander in der Detektionsrichtung zu positionieren, ist hier ebenfalls eine Vorschubeinrichtung (zeichnerisch nicht dargestellt) vorgesehen, die den Gelkörper in Richtung V vorschiebt.

Fig. 5 zeigt die Ausführungsvariante einer Einrichtung zum Befüllen eines mit mehreren Aussparungen 14 vorgesehenen Gelkörpers. Hier ist das Gel 1 zunächst von einer Tube 18 umschlossen, welche Einfüllöffnungen 19 aufweist. Dabei entspricht die Anzahl der Einfüllöffnungen 19 der Anzahl der Ansparungen 14.

Der Gelkörper ist innerhalb der Tube 18 verschiebbar, wodurch die Lage der Ansparungen 14 relativ zu den Einfüllöffnungen 19 veränderbar ist. In der Darstellung nach Fig. 5a sind die Einfüllöffnungen 19 über den Aussparungen 14 positioniert, so daß durch alle Einfüllöffnungen 19 hindurch zunächst jeweils eine Probe 2 und danach, soweit vorgesehenen und erforderlich, ein aushärtendes Gel eingefüllt werden kann.

Nach dem Einfüllen der Proben 2 und des aushärtenden Gels in die Aussparungen 14 wird der Gelkörper vermittels eines Stempels 20 innerhalb der Tube 18 in Richtung V so verschoben, daß sich die Konstellation nach Fig. 5b ergibt, wobei sich nun die Einfüllöffnungen 19 versetzt zu den Aussparungen 14 befinden und damit die Aussparungen 14 verschlossen sind.

Nachdem dem Befüllen wird der Gelkörper entweder aus der Tube 18 entnommen und wie anhand Fig. 4 erläutert gehandhabt, oder der Gelkörper verbleibt in der Tube 18 und die Tube 18 wird gemeinsam mit dem Gelkörper und den Proben 2 auf einer Haltevorrichtung (in Fig. 5 nicht dargestellt) so angeordnet, daß eine Drehung um die hier ebenfalls eingezeichnete Drehachse 15 erfolgen kann.

Dies setzt allerdings voraus, daß die Tube 18 aus einem transparenten Material gefertigt ist, das im wesentlichen denselben Brechungsindex wie das Gel 1 und die sich im Probenraum befindende Immersionsflüssigkeit hat. Wie bereits anhand Fig.4 erläutert, werden die Proben 2 zur Detektion zeitlich nacheinander in die optische Achse eines Detektionsobjektivs geschoben.

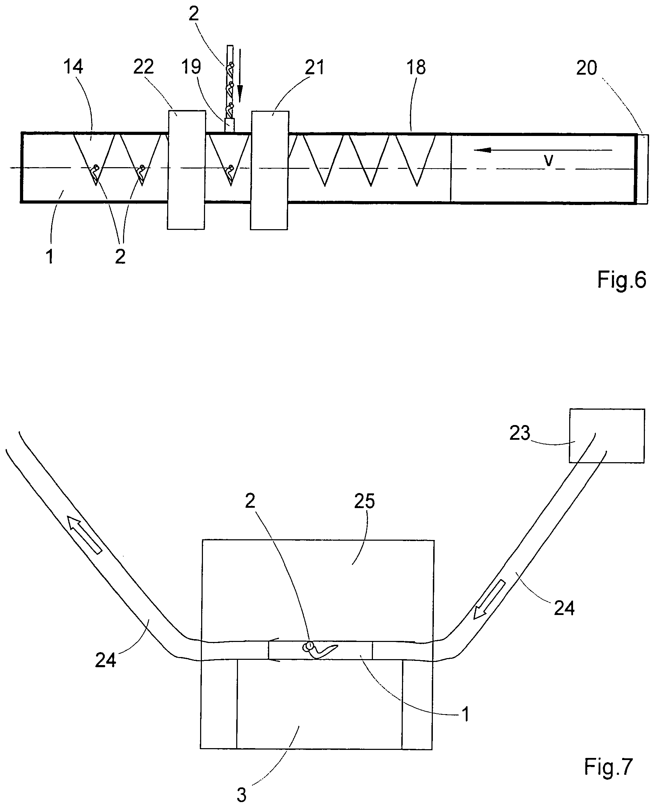

In einer weiteren Variante einer Einfüllvorrichtung, die anhand Fig.6 erläutert werden soll, befindet sich das Gel 1 wiederum in einer Tube 18, wobei hier jedoch nur eine Einfüllöffnung 19 vorhanden ist. Die Einfüllöffnung 19 ist wiederum zur Zuführung jeweils einer Probe 2 in eine der Aussparungen 14 bestimmt. Ebenfalls ist hier ein Stempel 20 vorgesehen, der auf einen manuell oder automatisch erzeugten Ansteuerbefehl hin das Gel 1 in der Richtung V um einen vorgegebenen Betrag vorschiebt.

Abweichend von der Darstellung nach Fig.5 sind hier zusätzlich eine Heizstation 21 und eine Kühlstation 22 vorhanden. Heizstation 21 und Kühlstation 22 umgreifen die Tube 18. Die Einfüllöffnung 19 befindet sich zwischen der Heizstation 21 und der Kühlstation 22.

Diese Einfüllvorrichtung wird wie folgt betrieben: während durch die Einfüllöffnung 19 hindurch eine Probe 2 in die Aussparung 14 eingebracht wird, wird das Gel 1 im Bereich der Aussparung 14, die von der Heizstation 21 umschlossen ist, vorgewärmt. Zugleich wird das Gel 1 im Bereich der von der Kühlstation 22 umgriffenen Aussparung 14 gekühlt.

Nachdem eine Probe 2 durch die Einfüllöffnung 19 in die Aussparung 14 zwischen der Heizstation 21 und der Kühlstation 22 eingebracht ist, wird das Gel 1 mittels des Stempels 20 um einen Betrag vorgeschoben, der dem Abstand zwischen zwei Aussparungen 14 entspricht, wodurch sich nun die

soeben befüllte Aussparung 14 im Bereich der Kühlstation 22 befindet und gekühlt wird, die bisher im Bereich der Heizstation 21 vorgewärmte Aussparung 14 sich nun zwischen der Heizstation 21 und der Kühlstation 22 unter der Einfüllöffnung 19 befindet und eine weitere Aussparung 14 in den Bereich der Heizstation 21 verschoben worden ist und hier vorgewärmt wird.

Optional kann diese Einfüllvorrichtung auch so betrieben werden, daß durch die Einfüllöffnung 19 unmittelbar nach der Probe 2 auch ein aushärtendes Gel eingebracht wird. Auf diese Weise wird erreicht, daß die jeweils unter die Einfüllöffnung 19 vorgeschobene, von der Heizstation 21 kommende und vorgewärmte Aussparung 14 das aushärtende Gel aufnimmt, so daß dies in der hohlkegelförmigen Aussparung 14 zunächst in dünnflüssiger Konsistenz gehalten wird und die Aussparung 14 vollständig ausfüllen und die darin enthaltene Probe 2 in ihrer Position fixieren kann. Nach der Verschiebung der gefüllten Aussparung 14 in den Bereich der Kühlstation 22 wird das Aushärten infolge der Kühlung beschleunigt.

Vorteilhaft ist diese Einfüllvorrichtung mit einer Ansteuerschaltung verbunden, die dafür sorgt, daß die Zeitspanne, nach der das Gel 1 jeweils um einen Abstand zwischen zwei Aussparungen 14 in . Richtung V verschoben wird, auf die Zeitspanne für das Einfüllen einer Probe 2 und auf das Aushärten des eingefüllten Gels abgestimmt ist. Zusätzlich sind die Prozeßzeiten für das Vorwärmen und Abkühlen auf diese Zeitspanne abgestimmt, indem die Höhe der Heiz- und Kühltemperatur entsprechend vorgegeben wird.

Fig. 7 zeigt eine Ausgestaltung der erfindungsgemäßen Vorrichtung, bei welcher jeweils eine einzelne Probe 2 von einem zu einem Kreiszylinder geformten Gel 1 umschlossen ist und sich eine Vielzahl solcher Gelkörper in einem in Fig.7 symbolisch angedeuteten Gelkörperreservoir 23 befinden. Beim Betreiben dieser Vorrichtung werden die Gelkörper einzeln aus dem Gelkörperreservoir 23 entnommen, durch eine Röhre 24 in den ebenfalls symbolisch angedeuteten Probenraum 25 befördert und dort auf der Haltevorrichtung 3 so positioniert, daß sich die Probe 2 in der optischen Achse und damit in der Detektionsrichtung eines Detektionsobjektivs befindet.

Nach Abschluß der Beobachtung bzw. Detektion wird der betreffende Gelkörper, wiederum durch eine Röhre 24 hindurch, aus dem Probenraum 25 abtransportiert.

Wird dieser Vorgang automatisiert, läßt sich auch hiermit ein hoher Durchsatz an Proben 2 erzielen.

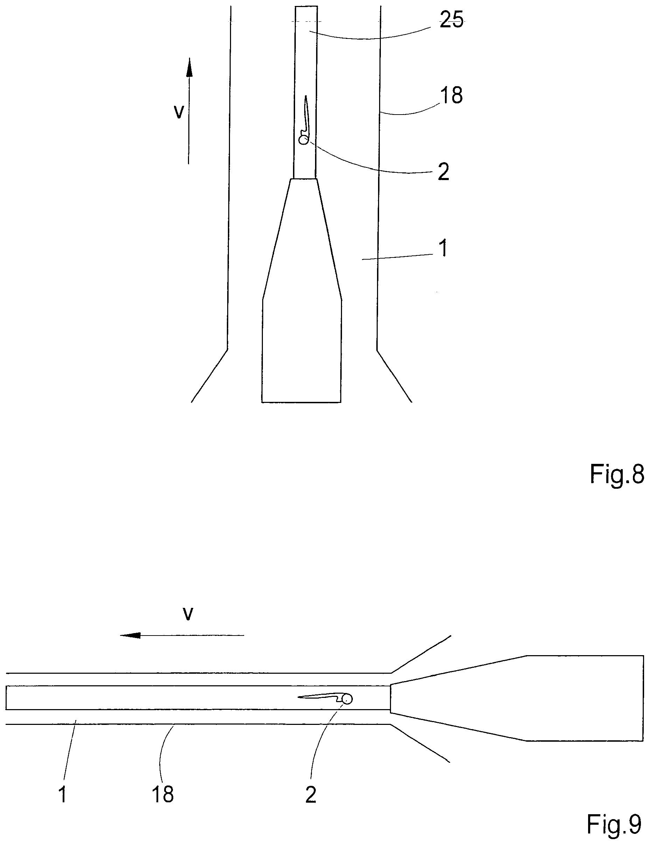

Fig. 8 zeigt ein erstes Beispiel einer Vereinzelungs- und Zuführeinrichtung für die Probe 2 durch Ausnutzung der Injektionswirkung. Hier wird beispielsweise durch die Sogwirkung eines durch eine Tube 18 in Richtung V vorgeschobenes Gel 1 eine Probe 2 aus einer Zuführkanüle 25 mitgenommen.

Fig.9 zeigt weitere Ausführungen von Vorrichtungen zur Nutzung der Injektionswirkungen, wobei hier anstelle des Gels 1 eine Flüssigkeit 26, im speziellen Fall eine Immersionsflüssigkeit, für die Sogwirkung sorgt.

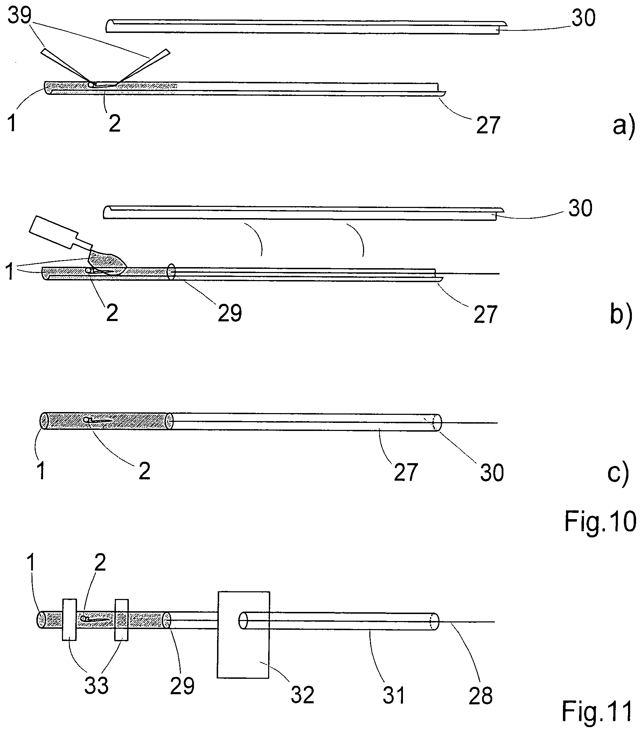

Ein vorteilhaftes Verfahren sowie eine zugehörige Vorrichtung zum Einbetten einer Probe 2 in ein Gel 1 zeigt Fig.10.

Hier wird zunächst in das Unterteil 27, das der ersten Hälfte einer in Längsrichtung geteilten Kanüle entspricht, eine verhältnismäßig geringe Menge eines aushärtenden, aber zunächst noch weichen Gels 1 eingelegt, und mit Ausrichtwerkzeugen 39 wird eine Probe 2 auf diese Gelmenge aufgesetzt (vgl. Fig. 10a).

Danach wird, wie in Fig. 10b dargestellt, die Probe 2 mit einer weiteren Menge eines noch weichen Gels 1 abgedeckt, wobei sich beide Anteile des Gels 1 verbinden und die Probe 2 miteinander einschließt. Nun wird ein Schubgestänge 28, an dessen einem Ende ein Stempel 29 befestigt ist, so in das Unterteil 27 eingelegt, daß sich der Stempel 29 zwischen dem Gel 1 und dem dem Gel 1 abgewandten Ende des Unterteils 27 befindet.

Anschließend wird das Oberteil 30, das der zweiten Hälfte der längsgeteilten Kanüle entspricht, unter Einwirkung eines angemessenen Druckes auf das Unterteil 27 aufgesetzt, wobei sich infolge der zwischen diesen beiden Teilen ausbildenden zylindrischen Hohlform das Gel 1 zu einem Gelkörper formt, dessen Außendurchmesser dem Innendurchmesser der Kanüle entspricht.

Dabei ist die Probe 2 vollständig von dem Gel 1 umschlossen. In der Folge wird durch Vorschieben des Schubgestänges 28 in Richtung V der Gelkörper vermittels des Stempels 29 ausgeschoben und steht zur weiteren Verwendung, beispielsweise im Zusammenhang mit der anhand Fig. 7 erläuterten Ausgestaltung der erfindungsgemäßen Vorrichtung, zur Verfügung. Um aber auch sicherzustellen, daß die Probe 2 zentrisch, d.h. in der Längsachse eines so gefertigten Gelkörpers positioniert ist, wird gemäß Fig.11 eine Verfahrensweise und eine Vorrichtung vorgeschlagen zum Überprüfen und gegebenenfalls Korrigieren der Lage der Probe 2 innerhalb des Gelkörpers, und zwar bevor das Gel 1 soweit ausgehärtet ist, daß eine solche Korrekturmöglichkeit nicht mehr besteht.

Diesbezüglich ist vorgesehen, vermittels des Schubgestänges 28 bzw. des Stempels 29 den Gelkörper mit der eingeschlossenen Probe 2 in eine Kanüle 31 vorzuschieben, die um ihre Längsachse rotierend gelagert und zur Erzeugung einer Rotationsbewegung mit einem Rotationsantrieb 32 gekoppelt ist.

In dieser Kanüle 31 wird der Gelkörper mit der Probe 2 bis zu einer Kontrollstation 33 vorgeschoben, die zur visuellen Kontrolle durch einen Bediener oder, wie nachfolgend beispielhaft dargestellt, unter Verwendung opto-elektronischer Mitteln, etwa in Form einer Lichtschranke, ausgebildet sein kann. Dabei stehen sich die Lichtquelle und der Detektor der Lichtschranke zu beiden Seiten der Kanüle 31 gegenüber, die zumindest im Bereich dieser Kontrollstation 33 eine Außenwand aufweist, die für das von der Lichtquelle kommende Licht transparent ist.

Betrieben wird diese Vorrichtung nun so, daß die Kanüle 31 zunächst während des Vorschiebens des Gelkörpers nicht in Rotation versetzt ist. Befindet sich die Probe 2 dann im Bereich der Lichtschranke, wird vermittels der Lichtschranke kontrolliert, ob die Probe 2 in der Längsachse positioniert ist. Befindet sich die Probe unterhalb der Längsachse, wird eine Drehung der Kanüle 31 gemeinsam mit dem Gelkörper soweit veranlaßt, daß die Probe 2 über der Längsachse und damit Rotationsachse zu liegen kommt. Da das Gel 1 noch nicht ausgehärtet ist, sinkt die Probe 2 unter Einwirkung der Erdschwerkraft ab und nähert sich dabei der Rotations- bzw. Längsachse, während der Aushärtungsprozeß des Gels 1 sich fortsetzt.

Ist die Aushärtung des Gels 1 noch nicht soweit fortgeschritten, daß die Probe 2 in ihrer gewünschten Position in der Rotationsachse verbleibt, sondern wieder unter die Rotationsachse absinkt, wird eine Drehung der Kanüle 31 um 180° veranlaßt, so das die Probe 2 nun wieder über die Rotationsachse zu liegen kommt, worauf sie wieder absinkt und diese Verfahrensschritte wiederholt werden, bis die Probe 2 schließlich innerhalb des nun ausgehärteten Gels 1 in der Rotationsachse fixiert ist. Danach kann die Probe mittels des Schubgestänges 28 bzw. des Stempels 29 ausgeschoben werden und steht zur Verwendung in der anhand Fig. 7 beschriebenen Vorrichtung zur Verfügung.

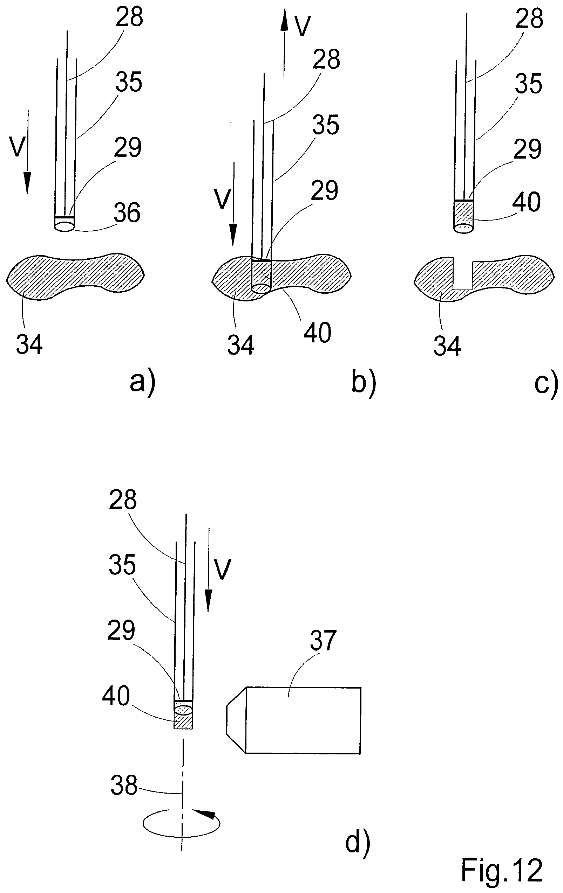

Ein nicht zur Erfindung gehöriges Verfahren mit zugehöriger Vorrichtung zeigt Fig. 12.

Um eine Probe 40 als Teilmenge aus einer biologischen Substanz 34, beispielsweise aus einem Hirngewebe, zu entnehmen, wird eine Kanüle 35, die an ihrem der Substanz 34 zugewandten Ende 36 scharf angeschliffen ist, in Richtung V in die Substanz 34 eingeführt (vgl. Fig .12a) . Dabei wird die Probe 40 aus der Substanz 34 herausgetrennt, von der Kanüle 35 umschlossen und mit dem Herausnehmen der Kanüle 35 in Richtung V aus der Substanz 34 entnommen (vgl. Fig.12b und Fig.12c). Das Herausnehmen kann gegebenenfalls mit Unterstützung eines sich innerhalb der Kanüle 35 geführten, bereits in Fig.10 und Fig.11 dargestellten Schubgestänges 28 mit Stempel 29 erfolgen, indem damit ein Unterdruck in der Kanüle 35 erzeugt wird, wodurch die Probe 40 beim Entfernen der Kanüle 35 aus der Substanz 34 in der Kanüle gehalten wird und auch verbleibt.

Wie anhand von Fig. 12d dargestellt, wird die Kanüle 35 nun mit der Probe 40 in den Probenraum einer mikroskopischen Anordnung zur Detektion der Probe 40 gebracht, wobei vermittels Schubgestänge 28 bzw. Stempel 29 die Probe 40 aus der Kanüle 35 soweit herausgeschoben wird, daß sie sich zum Teil im Detektionsbereich eines Detektionsobjektivs 37 befindet, zum übrigen Teil jedoch noch innerhalb der Kanüle 35 gehalten wird.

Ist die Kanüle 35 in einer speziellen Ausführung weiterhin um eine Rotationsachse 38 drehbar gelagert, sind mit Drehung der Kanüle 35 um diese Rotationsachse 38 unterschiedliche Detektionsrichtungen einstellbar.

### Bezugszeichenliste

- 1: Gel
- 2: Probe
- 3: Probenhalter
- 4: Stab
- 5, 6: Hohlkörper
- 7: Filter
- 8: Hohlkörper
- 9: Filter
- 10: Kapillare
- 11: Positioniereinrichtung
- 12: Lichtblatt
- 13: Detektionsobjektiv
- 14: Aussparung
- 15: Drehachse
- 16: Pfropfen
- 17: Gel
- 18: Tube
- 19: Einfüllöffnungen
- 20: Stempels
- 21: Heizstation
- 22: Kühlstation
- 23: Gelkörperreservoir
- 24: Röhre
- 25: Probenraum
- 26: Flüssigkeit
- 27: Unterteil
- 28: Schubgestänge
- 29: Stempel
- 30: Oberteil
- 31: Kanüle
- 32: Rotationsantrieb
- 33: Kontrollstation
- 34: Substanz
- 35: Kanüle
- 36: Ende
- 37: Detektionsobjektiv
- 38: Rotationsachse
- 39: Ausrichtwerkzeuge
- 40: Probe
- d: Durchmesser
- s, D, V: Richtungen

## Patentansprüche

1. Verfahren zum Positionieren mindestens einer Probe (2) im Probenraum (25) einer mikroskopischen Anordnung, wobei
- die mindestens eine Probe (2) in einen Körper aus transparentem Gel (1) eingebettet wird,
- das Gel (1) zu einem Gelkörper geformt wird,
- der Gelkörper vermittels einer um eine Drehachse (15) senkrecht zur optischen Achse des Detektionsobjektivs drehbaren Haltevorrichtung (3) im Probenraum (25) fixiert wird, wobei
- mit einer Drehung der Haltevorrichtung (3) um einen vorgegebenen Drehwinkel die Detektionsrichtung geändert wird,
- die Ausrichtung der Probe (2) relativ zur optischen Achse eines Detektionsobjektivs mehrfach verändert wird,
- aus jeder sich dabei ergebenden Detektionsrichtung Bildinformationen der Probe (2) gewonnen werden, und
- dabei die Probe (2) so gehalten wird, daß aus jeder Detektionsrichtung eine weitestgehend ungehinderte Sicht auf die Probe (2) oder Teile der Probe gewährleistet ist, **dadurch gekennzeichnet, dass**
- der Gelkörper mit einer Aussparung in Form eines Hohlkegels für die Probe (2) versehen wird und die Probe (2) in der Hohlkegelspitze positioniert und dort unter Einwirkung einer geringen, das Leben der Probe (2) nicht gefährdenden Kraft gehalten wird.

2. Verfahren nach Anspruch 1, bei dem zum Zentrieren der in einen Körper aus aushärtendem Gel (1) eingebetteten Probe (2) innerhalb des Gelkörpers
- der Gelkörper aus Gel (1) in noch nicht ausgehärtetem Zustand mit der eingeschlossenen Probe (2) in eine Kontrollstation (33) eingeschoben wird,
- mittels der Kontrollstation (33) die Lage der Probe (2) innerhalb des Gelkörpers bewertet wird, und
- im Ergebnis der Bewertung der Gelkörper relativ zur Erdschwerkraft so ausgerichtet wird, daß die Probe (2) unter Einwirkung der Schwerkraft in die gewünschte Position innerhalb des Gelkörpers sinkt.

3. Vorrichtung zum Positionieren mindestens einer biologischen Probe (2) im Probenraum (25) einer mikroskopischen Anordnung zur Detektion der Probe (2) mittels eines Verfahrens gemäß Anspruch 1 oder 2,
wobei die mindestens eine Probe (2) in einen Körper aus transparentem Gel (1) eingebettet ist umfassend:
- eine sich im Probenraum (25) der mikroskopischen Anordnung befindende und um eine Drehachse (15) senkrecht zur optischen Achse eines Detektionsobjektivs drehbare Haltevorrichtung (3) für jeweils einen Gelkörper, sodass der Gelkörper im Probenraum (25) fixiert und vermittels der Drehung der drehbaren Haltevorrichtung (3) um einen vorgegebenen Drehwinkel eine Detektionsrichtung geändert und eine Ausrichtung der Probe (2) relativ zur optischen Achse des Detektionsobjektivs mehrfach verändert werden kann;
- aus jeder sich dabei ergebenden Detektionsrichtung Bildinformationen der Probe (2) gewonnen werden;
- die Probe (2) dabei so gehalten werden kann, dass aus jeder Detektionsrichtung eine weitestgehend ungehinderte Sicht auf die Probe (2) oder Teile der Probe (2) möglich ist;
- **dadurch gekennzeichnet, dass** die Vorrichtung außerdem
- ein Reservoir (23) für Gelkörper gleicher Form und Größe, in die jeweils eine Probe (2) eingeschlossen ist,
- eine Entnahme- und Ablageeinrichtung zum Entnehmen einzelner Gelkörper aus dem Gelkörperreservoir (23) und zu deren Ablage in der Haltevorrichtung (3), sowie
- eine Entnahme- und Abtransporteinrichtung zum Entnehmen und Abtransportieren der Gelkörper aus der Haltevorrichtung (3) umfaßt; und
- der Gelkörper mit einer Aussparung in Form eines Hohlkegels für die Probe (2) versehen ist und die Probe (2) in der Hohlkegelspitze positioniert und dort unter Einwirkung einer geringen, das Leben der Probe (2) nicht gefährdenden Kraft gehalten ist.

4. Vorrichtung nach Anspruch 3, umfassend
- eine Bildauswerteeinrichtung, und
- eine in Abhängigkeit vom Ergebnis der Bildauswertung ansteuerbare Sortiereinrichtung, durch welche die einzelnen Gelkörper nach der Entnahme aus der Haltevorrichtung (3) in verschiedene Ablagebehälter einsortiert werden.

5. Vorrichtung zum Positionieren mindestens einer biologischen Probe (2) im Probenraum (25) einer mikroskopischen Anordnung zur Detektion der Probe (2) mittels eines Verfahrens gemäß Anspruch 1 oder 2, wobei die mindestens eine Probe (2) in einen Körper aus transparentem Gel (1) eingebettet ist, umfassend:
- einen Gelkörper mit mehreren Aussparungen (14) in Form von Hohlkegeln für jeweils eine Probe (2), in den mehrere Proben (2) eingeschlossen sind,
- eine sich im Probenraum (25) der mikroskopischen Anordnung befindende und um eine Drehachse (15) senkrecht zur optischen Achse eines Detektionsobjektivs drehbare Haltevorrichtung (3) für jeweils einen Gelkörper, sodass der Gelkörper im Probenraum (25) fixiert und vermittels der Drehung der drehbaren Haltevorrichtung (3) um einen vorgegebenen Drehwinkel eine Detektionsrichtung geändert und eine Ausrichtung der Probe (2) relativ zur optischen Achse des Detektionsobjektivs mehrfach verändert werden kann;
- aus jeder sich dabei ergebenden Detektionsrichtung Bildinformationen der Probe (2) gewonnen werden;
- die Probe (2) dabei so gehalten werden kann, dass aus jeder Detektionsrichtung eine weitestgehend ungehinderte Sicht auf die Probe (2) oder Teile der Probe (2) möglich ist;
- und die Probe (2) in der Hohlkegelspitze positioniert und dort unter Einwirkung einer geringen, das Leben der Probe (2) nicht gefährdenden Kraft gehalten ist; und
- eine Vorschubeinrichtung, die den Gelkörper aufnimmt und durch deren Betätigung der Gelkörper so verschoben wird, daß die eingeschlossenen Proben (2) zeitlich nacheinander durch den Probenraum (25) geführt werden und dabei von jeder Probe (2) eine dreidimensionale Abbildung gewonnen wird.

6. Vorrichtung nach Anspruch 5, umfassend
- eine Bildauswerteeinrichtung,
- einen motorischen Antrieb für die Vorschubeinrichtung,
- eine Ansteuerschaltung, die sowohl mit der Bildauswerteeinrichtung als auch mit dem Antrieb in Verbindung steht, wobei
- die Ansteuerschaltung so ausgelegt ist, daß nach Ende der Bildauswertung ein Steuerbefehl für den Antrieb generiert wird, der daraufhin eine Vorschubbewegung und damit einen Austausch der Proben (2) im Probenraum (25) bewirkt.

7. Vorrichtung nach Anspruch 5, **dadurch gekennzeichnet, daß** eine Entnahme- und Einfülleinrichtung zum Entnehmen einzelner Proben (2) aus einem Probenreservoir und zu deren Einfüllen in die Aussparungen (14) vorhanden ist.

## Claims

1. Method for positioning at least one sample (2) in the sample space (25) of a microscopic arrangement, wherein
- the at least one sample (2) is embedded in a body made of a transparent gel (1),
- the gel (1) is shaped into a gel body,
- the gel body is fixed in the sample space (25) by means of a holding apparatus (3), which is rotatable about an axis of rotation (15) perpendicular to the optical axis of the detection objective, wherein
- the detection direction is changed by way of a rotation of the holding apparatus (3) by a specified angle of rotation,
- the orientation of the sample (2) relative to the optical axis of a detection objective is changed multiple times,
- image information of the sample (2) is obtained from each resulting detection direction, and,
- in the process, the sample (2) is held such that a largely unimpeded view of the sample (2) or parts of the sample from each detection direction is ensured, **characterized in that**
- the gel body is provided with a cutout in the form of a hollow cone for the sample (2), and the sample (2) is positioned in the hollow cone tip and is held there under the action of a small force that does not endanger the life of the sample (2).

2. Method according to Claim 1, in which, for centring the sample (2), which is embedded in a body made of a curing gel (1), within the gel body,
- the gel body made of gel (1) is inserted in a not yet cured state with the enclosed sample (2) into a monitoring station (33),
- the position of the sample (2) within the gel body is assessed by way of the monitoring station (33), and,
- as a result of the assessment, the gel body is oriented relative to gravity such that the sample (2) sinks into the desired position within the gel body under the action of gravity.

3. Apparatus for positioning at least one biological sample (2) in the sample space (25) of a microscopic arrangement for detecting the sample (2) by way of a method according to Claim 1 or 2,
wherein the at least one sample (2) is embedded in a body made of transparent gel (1), comprising:
- a holding apparatus (3), which is located in the sample space (25) of the microscopic arrangement and is rotatable about an axis of rotation (15) perpendicular to the optical axis of a detection objective, for in each case one gel body, with the result that the gel body is fixed in the sample space (25) and a detection direction is changed by means of the rotation of the rotatable holding apparatus (3) by a specified angle of rotation, and an orientation of the sample (2) relative to the optical axis of the detection objective can be changed multiple times;
- image information of the sample (2) is obtained from each resulting detection direction;
- in the process, the sample (2) is held such that a largely unimpeded view of the sample (2) or parts of the sample (2) from each detection direction is possible;
- **characterized in that** the apparatus additionally comprises
- a reservoir (23) for gel bodies that have the same shape and size and in which in each case one sample (2) is enclosed,
- a removal and placement device for removing individual gel bodies from the gel body reservoir (23) and for placing them in the holding apparatus (3), and
- a removal and transport device for removing the gel bodies from the holding apparatus (3) and transporting them away; and
- the gel body is provided with a cutout in the form of a hollow cone for the sample (2), and the sample (2) is positioned in the hollow cone tip and is held there under the action of a small force that does not endanger the life of the sample (2).

4. Apparatus according to Claim 3, comprising
- an image evaluation device, and
- a sorting device, which is controllable in dependence on the result of the image evaluation and with which the individual gel bodies are sorted into different placement containers after their removal from the holding apparatus (3) .

5. Apparatus for positioning at least one biological sample (2) in the sample space (25) of a microscopic arrangement for detecting the sample (2) using a method according to Claim 1 or 2, wherein the at least one sample (2) is embedded in a body made of a transparent gel (1), comprising:
- a gel body, which has a plurality of cutouts (14) in the form of hollow cones for in each case one sample (2) and in which a plurality of samples (2) are enclosed,
- a holding apparatus (3), which is located in the sample space (25) of the microscopic arrangement and is rotatable about an axis of rotation (15) perpendicular to the optical axis of a detection objective, for in each case one gel body, with the result that the gel body is fixed in the sample space (25) and a detection direction is changed by means of the rotation of the rotatable holding apparatus (3) by a specified angle of rotation, and an orientation of the sample (2) relative to the optical axis of the detection objective can be changed multiple times;
- image information of the sample (2) is obtained from each resulting detection direction;
- in the process, the sample (2) is held such that a largely unimpeded view of the sample (2) or parts of the sample (2) from each detection direction is possible;
- and the sample (2) is positioned in the hollow cone tip and is held there under the action of a small force that does not endanger the life of the sample (2); and
- a feed device, which accommodates the gel body and is actuated to displace the gel body such that the enclosed samples (2) are guided temporally successively through the sample space (25) and, in the process, a three-dimensional imaged representation of each sample (2) is obtained.

6. Apparatus according to Claim 5, comprising
- an image evaluation device,
- a motor drive for the feed device,
- a control circuit, which is connected both to the image evaluation device and to the drive, wherein
- the control circuit is configured such that, after the end of the image evaluation, a control command is generated for the drive which subsequently brings about a feed movement and consequently an exchange of the samples (2) in the sample space (25).

7. Apparatus according to Claim 5, **characterized in that** a removal and filling device for removing individual samples (2) from a sample reservoir and for filling them into the cutouts (14) is provided.

## Revendications

1. Procédé pour positionner au moins un échantillon (2) dans un espace à échantillon (25) d'un arrangement de microscopie,
- l'au moins un échantillon (2) est enrobé dans un corps en gel transparent (1),
- le gel (1) est façonné en un corps de gel,
- le corps de gel est calé dans l'espace à échantillon (25) au moyen d'un système de maintien (3) qui peut tourner autour d'un axe de rotation (15) perpendiculaire à l'axe optique de l'objectif de détection,
- le sens de détection étant modifié par une rotation du système de maintien (3) selon un angle de rotation prédéfini,
- l'orientation de l'échantillon (2) par rapport à l'axe optique d'un objectif de détection étant modifiée plusieurs fois,
- des informations d'image de l'échantillon (2) étant collectées depuis chaque sens de détection ici obtenu et
- l'échantillon (2) étant ici maintenu de telle sorte qu'une vision en grande partie non entravée sur l'échantillon (2) ou une partie de l'échantillon est garantie depuis chaque sens de détection, **caractérisé en ce que**
- le corps de gel est pourvu d'une niche sous la forme d'un cône creux pour l'échantillon (2) et l'échantillon (2) est positionné dans la pointe du corps creux et y est maintenu sous l'effet d'une force faible qui ne menace pas la vie de l'échantillon (2).

2. Procédé selon la revendication 1, avec lequel, pour le centrage à l'intérieur du corps de gel de l'échantillon (2) enrobé dans un corps de gel (1) durci,
- le corps de gel en gel (1), dans l'état pas encore durci avec l'échantillon (2) enfermé, est inséré dans une station de contrôle (33),
- la position de l'échantillon (2) à l'intérieur du corps de gel est évaluée au moyen de la station de contrôle (33) et
- en résultat de l'évaluation, le corps de gel est orienté par rapport à la gravité terrestre de telle sorte que l'échantillon (2) s'enfonce dans la position souhaitée à l'intérieur du corps de gel sous l'effet de la gravité.

3. Système pour positionner au moins un échantillon biologique (2) dans un espace à échantillon (25) d'un arrangement de microscopie destiné à détecter l'échantillon (2) au moyen d'un procédé selon la revendication 1 ou 2,
l'au moins un échantillon (2) étant enrobé dans un corps en gel transparent (1), comprenant :
- un système de maintien (3) respectivement pour un corps de gel, qui se trouve dans l'espace à échantillon (25) de l'arrangement de microscopie et qui peut tourner autour d'un axe de rotation (15) perpendiculaire à l'axe optique d'un objectif de détection, de sorte que le corps de gel est calé dans l'espace à échantillon (25) et qu'un sens de détection est modifié au moyen de la rotation du système de maintien (3) selon un angle de rotation prédéfini et qu'une orientation de l'échantillon (2) par rapport à l'axe optique de l'objectif de détection peut être modifiée plusieurs fois ;
- des informations d'image de l'échantillon (2) sont collectées depuis chaque sens de détection ici obtenu ;
- l'échantillon (2) peut ici être maintenu de telle sorte qu'une vision en grande partie non entravée sur l'échantillon (2) ou une partie de l'échantillon est possible depuis chaque sens de détection ;
- **caractérisé en ce que** le système comprend en outre
- un réservoir (23) pour des corps de gel de mêmes forme et taille dans lesquels est respectivement enfermé un échantillon (2),
- un dispositif de prélèvement et de dépose destiné à déposer des corps de gel individuels hors du réservoir à corps de gel (23) et à les déposer dans le système de maintien (3) ainsi
- qu'un dispositif de prélèvement et d'emport destiné à prélever et à emporter le corps de gel hors du système de maintien (3) ; et
- le corps de gel est pourvu d'une niche sous la forme d'un cône creux pour l'échantillon (2) et l'échantillon (2) est positionné dans la pointe du corps creux et y est maintenu sous l'effet d'une force faible qui ne menace pas la vie de l'échantillon (2).

4. Système selon la revendication 3, comprenant
- un dispositif d'interprétation d'image et
- un dispositif de tri qui peut être commandé en fonction du résultat de l'interprétation d'image, par le biais duquel les corps de gel individuels sont triés dans différents récipients de dépose après le prélèvement hors du système de maintien (3).

5. Système pour positionner au moins un échantillon biologique (2) dans un espace à échantillon (25) d'un arrangement de microscopie destiné à détecter l'échantillon (2) au moyen d'un procédé selon la revendication 1 ou 2, l'au moins un échantillon (2) étant enrobé dans un corps en gel transparent (1), comprenant :
- un corps de gel pourvu de plusieurs niches (14) sous la forme de cônes creux pour respectivement un échantillon (2), dans lequel sont enfermés plusieurs échantillons (2),
- un système de maintien (3) respectivement pour un corps de gel, qui se trouve dans l'espace à échantillon (25) de l'arrangement de microscopie et qui peut tourner autour d'un axe de rotation (15) perpendiculaire à l'axe optique d'un objectif de détection, de sorte que le corps de gel est calé dans l'espace à échantillon (25) et qu'un sens de détection est modifié au moyen de la rotation du système de maintien (3) selon un angle de rotation prédéfini et qu'une orientation de l'échantillon (2) par rapport à l'axe optique de l'objectif de détection peut être modifiée plusieurs fois ;
- des informations d'image de l'échantillon (2) sont collectées depuis chaque sens de détection ici obtenu ;
- l'échantillon (2) peut ici être maintenu de telle sorte qu'une vision en grande partie non entravée sur l'échantillon (2) ou une partie de l'échantillon est possible depuis chaque sens de détection ;
- et l'échantillon (2) est positionné dans la pointe du corps creux et y est maintenu sous l'effet d'une force faible qui ne menace pas la vie de l'échantillon (2) ; et
- un dispositif d'avance qui recueille les corps de gel et sous l'actionnement duquel les corps de gel sont décalés de telle sorte que les échantillons (2) enfermés sont guidés chronologiquement les uns après les autres à travers l'espace à échantillon (25) et une représentation tridimensionnelle de chaque échantillon (2) est ici obtenue.

6. Système selon la revendication 5, comprenant
- un dispositif d'interprétation d'image,
- un mécanisme d'entraînement motorisé pour le dispositif d'avance,
- un circuit de commande qui est en liaison à la fois avec le dispositif d'interprétation d'image et avec le mécanisme d'entraînement,
- le circuit de commande étant conçu de telle sorte qu'après la fin de l'interprétation d'image, une instruction de commande est générée pour le mécanisme d'entraînement, lequel produit alors un mouvement et ainsi un remplacement des échantillons (2) dans l'espace à échantillon (25).

7. Système selon la revendication 5, **caractérisé en ce qu'**un dispositif de prélèvement et de remplissage est présent, lequel est destiné à prélever les échantillons (2) individuels hors d'un réservoir à échantillons et à en remplir les niches (14).
